(19) Europäisches Patentamt
European Patent Office
Office européen des brevets

(11) **EP 2 660 141 A1**

(12) **EUROPEAN PATENT APPLICATION**

(43) Date of publication:
**06.11.2013 Bulletin 2013/45**

(51) Int Cl.:
***B63B 35/44*** *(2006.01)*

(21) Application number: **13003808.6**

(22) Date of filing: **26.10.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br><br>(30) Priority: **27.10.2009 US 255261 P**<br><br>(62) Document number(s) of the earlier application(s) in accordance with Art. 76 EPC:<br>**10798831.3 / 2 493 753**<br><br>(71) Applicant: **Windflip AS**<br>**7491 Trondheim (NO)**<br><br>(72) Inventors:<br>• **Hynne, Anders**<br>**N-7716 Steinkjer (NO)** | • **Mannsaker, Torbjorn**<br>**N-2014 Blystadia (NO)**<br><br>(74) Representative: **Helbig, Christian**<br>**Wagner + Helbig**<br>**Patentanwälte**<br>**Pfarrstrasse 14**<br>**80538 München (DE)**<br><br>Remarks:<br>•This application was filed on 07-08-2013 as a divisional application to the application mentioned under INID code 62.<br>•Claims filed after the date of filing of the application (Rule 68(4) EPC). |

(54) **Partially submersible wind turbine transport vessel**

(57) A partially submersible wind turbine (24) transport vessel (10) is provided. The vessel (10) includes a port-side wing tank disposed on a port side (12) of the hull (22) and a starboard-side wing tank is disposed on a starboard side (14) of the hull (22). Both wing tanks are positioned to be above a waterline of the vessel (10) when the vessel is in a horizontal position, and below a waterline of the vessel (10) when the vessel is in a vertical position. The vessel is configured to rotate, while afloat, about a lateral axis of the hull, altering a pitch of the vessel in such a way as to completely submerge the stem (16) and elevate the bow (18) to a substantially vertical hull position. The floatable wind turbine (24) can then be separated from the vessel and moored.

**Fig. 1**

**Description**

**RELATED APPLICATION**

This application claims priority to, and the benefit of, co-pending United States Provisional Application No. 61/255,261, filed October 27, 2009, for all subject matter common to both applications. The disclosure of said provisional application is hereby incorporated by reference in its entirety.

**FIELD OF THE INVENTION**

The present invention relates to vessels suitable for transportation of wind turbines in water, and more particularly to a partially submersible vessel capable of transporting a wind turbine elevated out of the water and delivery of the wind turbine in a vertical floating position for installation at a desired location.

**BACKGROUND OF THE INVENTION**

Conventional offshore wind turbines typically stand on towers that are driven deep into the ocean floor. Such wind turbines must be installed at locations where the water depth is typically 50 feet or less. To overcome this constraint, floating wind turbines have been created. The floating structure is formed of a steel, or similar high strength material, cylinder filled with a ballast. The ballast can be water, earth, rocks, and the like. A large capacity floating wind turbine could extend 100 meters beneath the sea's surface. Such units attach to the ocean floor using a mooring system. These floating wind turbines can be located much farther out to sea than land mounted ocean wind turbines, where the average wind speed is greater, thus resulting in better energy generation performance.

To locate these floating wind turbines in the desired offshore location, they must be towed while afloat in their substantially vertical position. This results in a very high  towing resistance. As a result of the high towing resistance, large tugboats are required. Another consideration when towing wind turbines is the considerable lateral motion that results due to vortex shedding. The lateral motion makes towing of wind turbines in a vertical position at speeds above two knots very difficult. As such, the movement of a floating wind turbine from one location to another can take a substantial amount of time.

One advantage to towing wind turbines in their vertical position is that there is little innovation required to tow the turbines. The technology exists today, and is well established.

To increase the speed by which a wind turbine may be transported, the wind turbine could be lifted completely out of the water and onto a barge in horizontal position. However, using conventional technology and equipment, such a solution would require a crane vessel to lift the wind turbine onto a barge or vessel for transportation. Once the wind turbine and barge arrive at the desired destination, the crane vessel, having accompanied the barge, must then lift the wind turbine off the barge and lower it into the water. Considering the weight and size of such floating wind turbines, which can approach 6500 tons, 8000 tons, or even greater amounts, there are not many crane vessels in the world with sufficient lifting capacity, thus availability could be problematic. In addition, such an operation may require multiple vessels to handle and deliver the wind turbine.

**SUMMARY OF THE INVENTION**

There is a need for a solution for delivery of floatable wind turbines to desired water locations in a more effective and efficient manner than towing the wind turbine through the water in vertical position, or using multiple vessels to transport the wind turbine out of the water. The present invention is directed toward further solutions to address this need, in addition to having other desirable characteristics.

In accordance with one embodiment of the present invention, a partially submersible vessel includes a hull having a port side, a starboard side, a stern, and a bow, the hull having a taper leading to the bow. A port-side wing tank is disposed on a  port side of the hull and a starboard-side wing tank is disposed on a starboard side of the hull. A wind turbine mounting apparatus is disposed on a deck of the vessel and is configured to support a wind turbine positioned generally horizontal or lateral with the deck. The vessel is configured to rotate, while afloat, about a lateral axis of the hull altering a pitch of the vessel in such a way as to completely submerge the stern and elevate the bow to a substantially vertical hull position. The substantially vertical hull position is characterized by a longitudinal axis of the hull being substantially perpendicular to a top surface of the water. A waterline of the hull when floating in the substantially vertical hull position is substantially between the taper and the bow.

In accordance with aspects of the present invention, wherein vessel can have a draught of about 120 meters or less. The vessel can be further configured to rotate about the lateral axis of the hull to submerge and maintain the bow at about 5 degrees from horizontal. The vessel can be a barge. The vessel can further include an open stern configuration having an inclined plane deck.

In accordance with one example embodiment of the present invention, a method of transporting and delivering a floatable cargo includes loading the cargo recumbently onto a partially submersible vessel, the cargo being elevated above a surface of water in which the vessel floats. The vessel is positioned at a desired delivery location. Ballast is introduced into a plurality of displacement tanks to pivot the vessel about a lateral axis, submerging a stern portion of the vessel and elevating a bow portion of the vessel, until the vessel has rotated from a substantially horizontal position to a substantially vertical position. The floatable cargo is released from the vessel for positioning and mooring.

In accordance with aspects of the present invention, the method can further include filling two or more wing tanks with ballast, the wing tanks being positioned on the vessel in such a way that they are above a waterline of the vessel when the vessel is in the horizontal position, and below a waterline of the vessel when the vessel is in the vertical position.

In accordance with further aspects of the present invention, the floatable cargo can be a floatable wind turbine.

## BRIEF DESCRIPTION OF THE DRAWINGS

The present invention will become better understood with reference to the following description and accompanying drawings, wherein:

FIG. 1 is a perspective view of a partially submersible wind turbine transport vessel, according to one embodiment of the present invention;

FIG. 2 is a diagrammatic side view of a partially submersible wind turbine transport vessel, according to one embodiment of the present invention;

FIG. 3 is a diagrammatic top view of the vessel of FIG. 2, according to one aspect of the present invention;

FIG. 4 is a diagrammatic side view of the vessel in a vertical position, according to one aspect of the present invention;

FIG. 5 is a schematic perspective view of a plurality of displacement tanks located inside the vessel, according to one aspect of the present invention;

FIG. 6 is a diagrammatic side view of the vessel in a bow down position, according to one aspect of the present invention; and

FIG. 7 is a perspective view of an open stern configuration, according to one aspect of the present invention.

## DETAILED DESCRIPTION

An illustrative embodiment of the present invention relates to a partially submersible wind turbine transport vessel. The vessel is formed of a hull having a port side, starboard side, stern, and bow, with a taper leading to the bow in such a way that the beam width of the hull reduces approaching the bow. A port-side wing tank is disposed on a port side of the hull and a starboard-side wing tank is disposed on a starboard side of the hull. A wind turbine mounting apparatus is disposed on a deck of the vessel configured to support a wind turbine positioned generally horizontal or lateral with the deck. The vessel is configured to rotate, while afloat, about a lateral axis of the hull, altering a pitch of the vessel in such a way as to completely submerge the stern and elevate the bow to a substantially vertical hull position. This rotation is achieved by filling a plurality of ballast tanks, including the port-side and starboard-side wing tanks, with water. This can be done, for example, by opening valves leading to the tanks, and can be controlled remotely from a nearby ship through remote control. The substantially vertical hull position is characterized by a longitudinal axis of the hull being substantially perpendicular to a top surface of the water. A waterline of the hull when floating in the substantially vertical hull position is substantially between the taper and the bow. When it is desired for the hull to return to the horizontal position, the ballast tanks are emptied by using pressurized air. The pressurized air can originate from a nearby ship.

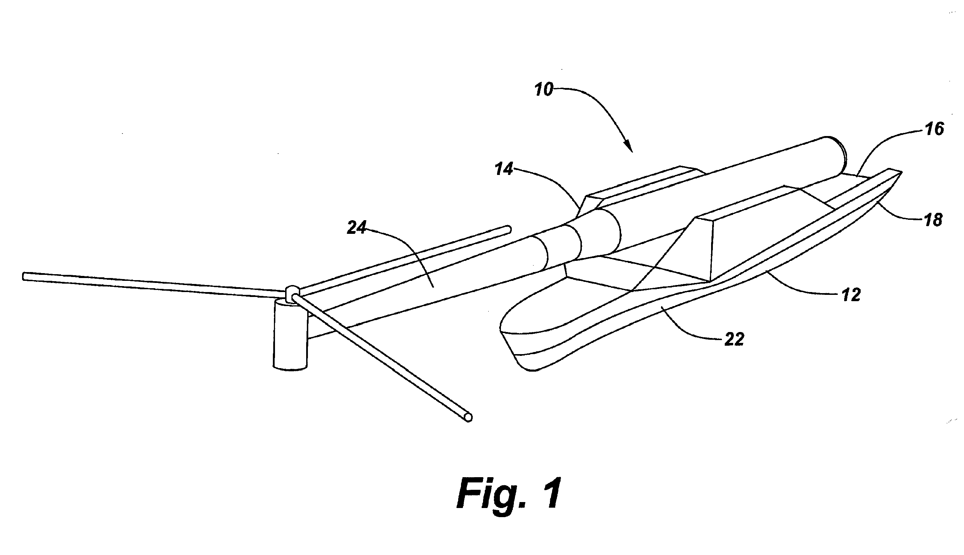

FIGS. 1 through 7, wherein like parts are designated by like reference numerals throughout, illustrate example embodiments of a partially submersible vessel capable of transporting floatable wind turbines, according to the present invention. Although the present invention will be described with reference to the example embodiments illustrated in the figures, it should be understood that many alternative forms can embody the present invention. One of ordinary skill in the art will additionally appreciate different ways to alter the parameters of the embodiments disclosed, such as the size, shape, or type of elements or materials, in a manner still in keeping with the spirit and scope of the present invention.

FIG. 1 is a perspective view of a partially submersible vessel 10, suitable for transporting wind turbines, according to one embodiment of the present invention. The vessel 10 has a port side 12, a starboard side 14, a stern 16, and a bow 18. The vessel 10 may include auxiliary spaces 20 for housing crew, vessel controls, a bridge, storage, couplings to external supplies, and the like. Any of these auxiliary spaces 20 can be included, or not, depending on the intended use of the vessel 10. A hull 22 of the vessel 10 is constructed of conventional hull materials, such as metal, fiberglass, and/or composite materials known to those of ordinary skill in the art. The vessel 10 can be self-propelled, or can be in the form of a barge, requiring that it be towed by a tugboat, or the like.

Also shown in **FIG. 1** is a floatable wind turbine 24 recumbently positioned on a deck of the vessel. A floatable wind turbine 24 is a wind turbine that has sufficient buoyancy to float in water in a substantially vertical configuration during operation. The floatable wind turbine 24 can be manufactured by a number of different manufacturers. The floatable wind turbine 24, once positioned in the water at a desired location, is anchored or moored by multiple anchors or moorings, and then floats in place while operational. An example floatable wind turbine 24 is the Hywind wind turbine, manufactured by Siemens and Tehchnip for StatoilHydro. This wind turbine produces 2.3 MW, has a weight of 6500 tons, a height of 65 m, a draft of draft 100 m, can be installed in water depths of 120-700 m, and requires three mooring lines. One of ordinary skill in the art will appreciate that the present invention is by no means limited to operating in conjunction with this specific example floatable wind turbine, but that other floatable wind turbines having similar attributes and characteristics, and compliant with vessels of the type disclosed herein for transport and delivery, are anticipated for use with the present invention.

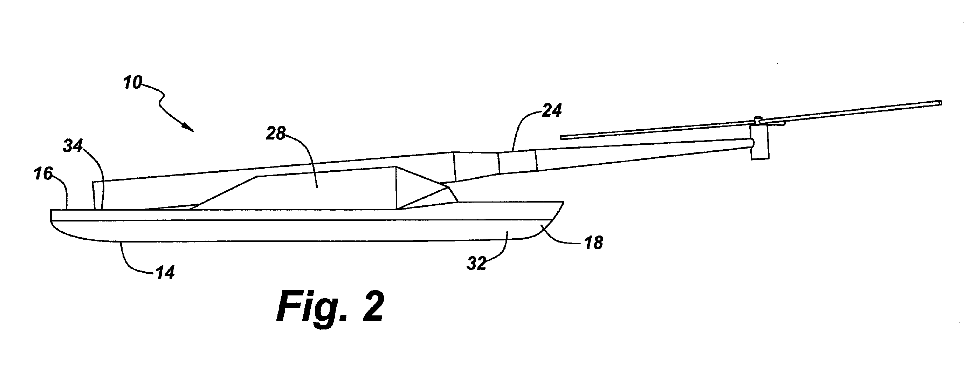

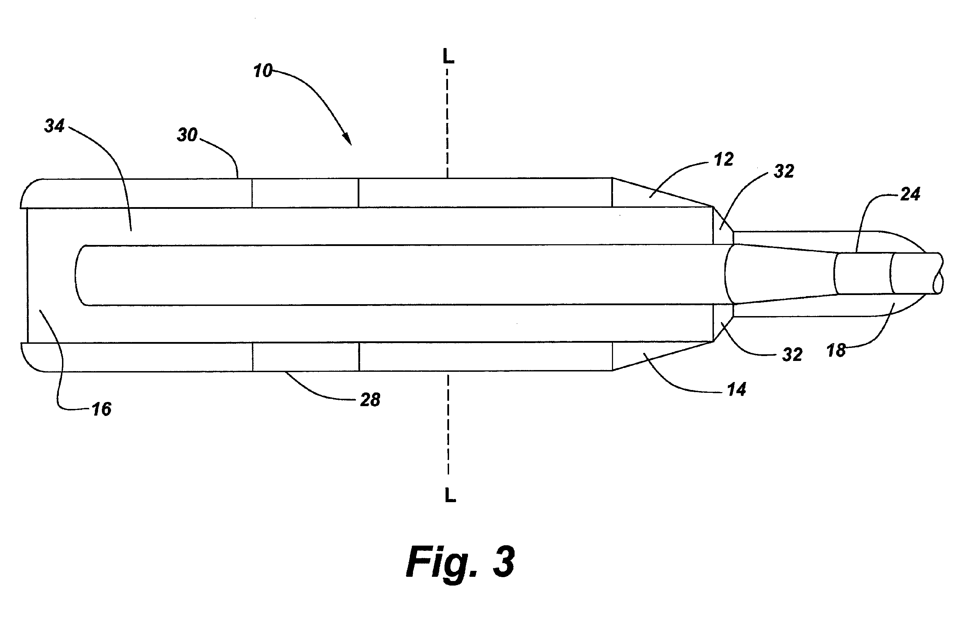

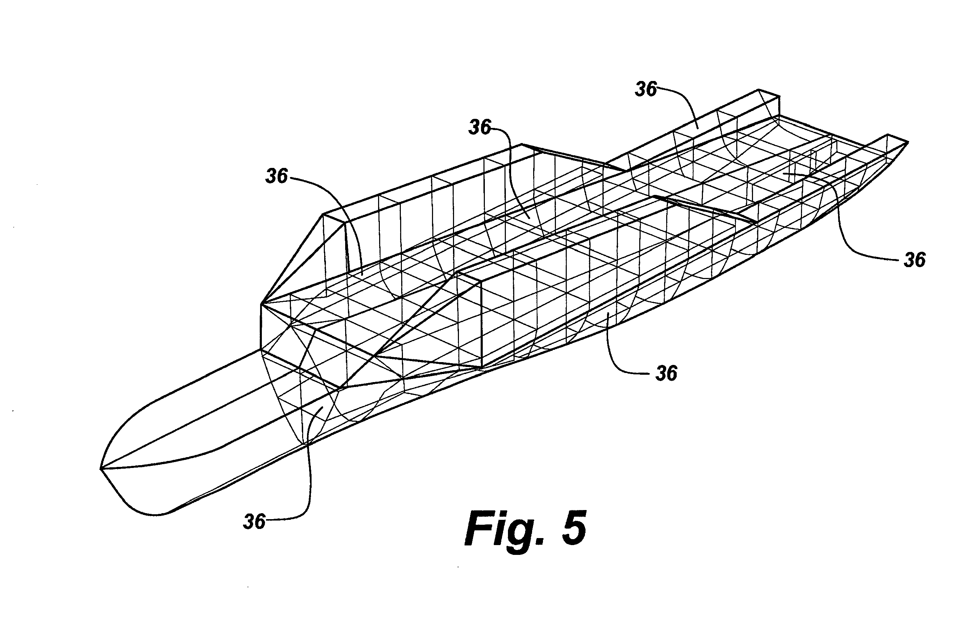

**FIG. 2** illustrates a side view of the partially submersible vessel 10 in accordance with another embodiment of the present invention. In this embodiment, the vessel 10 is in a barge configuration, without its own self-propulsion mechanism. Viewable in this figure are the starboard side 14, the stern 16, the bow 18, and the wind turbine 24. In addition, a starboard-side wing tank 28 is shown extending upward from a deck level of the vessel 10. **FIG. 3** shows a top view of the vessel 10 where both the starboard-side wing tank 28 and a port-side wing tank 30 can be seen. The starboard-side wing tank 28 and the port-side wing tank 30 are symmetrical with each other and rise above the deck level of the vessel 10. This configuration is useful in the operation of the vessel, as described herein. Both the starboard-side wing tank 28 and the port-side wing tank 30 are displacement tanks that are additional to a plurality of displacement tanks 36 disbursed throughout the hull 22 of the vessel 10 (*see* **FIG. 5**).

What is meant by a "displacement tank" is any suitable tank as described herein that can be configured to hold water, pressurized air, and the like. The displacement tank can serve a variety of purposes, including controlling displacement by adjusting the type, quantity, etc. of fluid contents or pressurized air within the tank. As such, one of ordinary skill in the art will appreciate that in some embodiments of the present invention, a ballast tank can serve as a suitable displacement tank.

The hull 22, as shown in **FIG. 3**, includes a taper 32 between a main section of the hull 22 and the bow 18. The taper 32 is a transition between the beam width of the hull 22 in the main section, and the beam width of the hull at the bow 18. The taper 32 reduces the beam width of the hull 22 at a point along the length of the hull prior to a waterline defined along the hull 22 when the vessel 10 is in a partially submerged condition, as described herein. The reduction of the beam width of the hull 22 at the taper 32 enables the hull 22 to have a similar ratio of displacement to water plane area as the floatable wind turbine 24. Said differently, the reduction in beam width reduces the waterline area of the vessel when in vertical position. This reduction is necessary to achieve a similar waterplane area (Awl) to displacement ($\Delta$) ratio (Awl/$\Delta$) as the wind turbine 24 being transported and delivered.

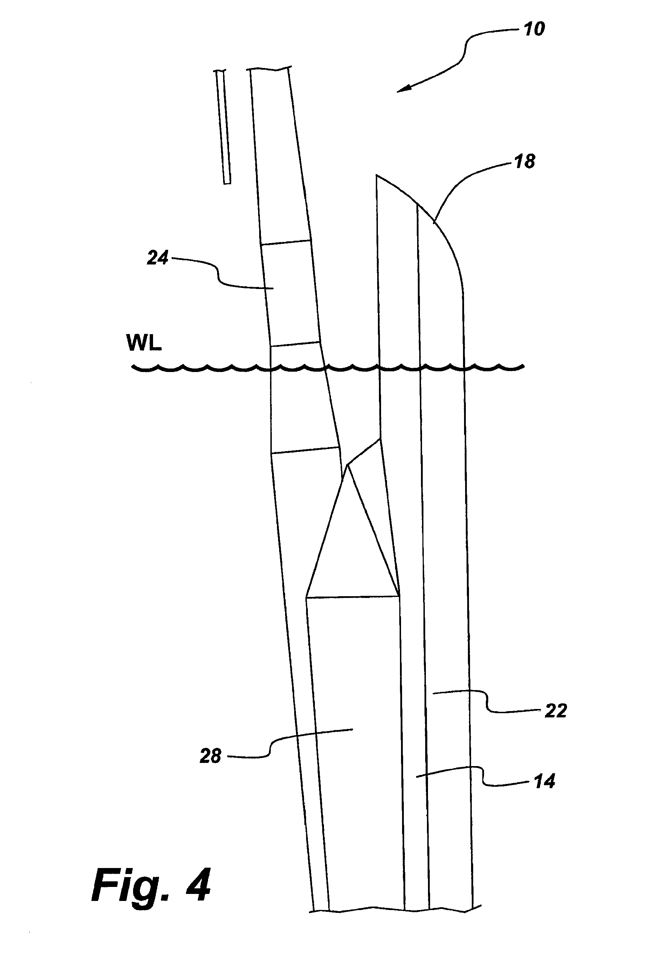

**FIG. 4** illustrates the partially submersible vessel 10 after having been pivoted or rotated around its lateral axis about 90 degrees from horizontal, thereby placing the vessel 10 in a substantially vertical position. An imaginary line labeled "WL" shows the waterline of the vessel 10 as it floats in the water in this vertical position. As can be seen, the waterline WL is above the beamier portion of the hull 22, and the taper 32.

**FIG. 5** is a schematic representation of the plurality of displacement tanks 36 disbursed throughout the hull 22 of the vessel 10. In the illustration, for purposes of clarity, the hull 22 and surrounding structures have been removed and the internal displacement tank structure is shown. As can be seen, the plurality of displacement tanks 36 substantially fill and replicate the shape of the hull 22 that holds the tanks. Each of the plurality of displacement tanks 36 can have water or pressurized air supplied to it to control the displacement. The water is supplied from the body of water in which the vessel 10 floats. The pressurized air is provided by one or more pressurized air tanks or compressors located either on the vessel 10 or on a nearby vessel or structure. One of ordinary skill in the art will appreciate that the pressurized air can be provided a number of different ways, including in tanks or by compressor. As each of the plurality of displacement tanks 36 fills with water, the vessel 10 increasingly submerges and pivots or rotates about its lateral axis L (*see* **FIG. 3**). The vessel 10 can pivot or rotate, altering a pitch of the vessel 10 in such a way as to completely submerge the stern 16 and elevate the bow 18 until a substantially vertical hull position (as shown in **FIG. 4**) is achieved. This rotation is implemented by filling a plurality of ballast tanks, including the port-side and starboard-side wing tanks, with water by opening valves on the deck, in accordance with one embodiment of the present invention. This can be done remotely from a nearby ship through remote control, or by onboard equipment. The substantially vertical hull position is characterized by a longitudinal axis of the hull being substantially perpendicular to a top surface of the water in which the vessel floats.

In operation, the partially submersible vessel 10 supports cargo in the form of the floatable wind turbine 24 mounted substantially horizontally across the deck of the vessel 10. The floatable wind turbine 24 can be mounted using a number of different mounting structures and configurations to hold the floatable wind turbine 24 in place on the deck during transport. Because the floatable wind turbine 24 is completely elevated out of the water, the floatable wind turbine 24 does not directly cause any additional drag on the vessel 10 as it moves through the water. Likewise, the vessel 10 itself maintains a substantially conventional shaped hull, with a narrowed bow 18 section to cut through the water as the vessel 10 is underway.

When the vessel 10 arrives at a desired floatable wind turbine 24 installation location, the vessel halts forward motion. Introducing water into the plurality of displacement tanks 36 in an ordered fashion causes pivoting or rotation of the hull 22 about lateral axis L. As water fills the plurality of displacement tanks 36, the stern 16 submerges into the water and the floatable wind turbine 24 likewise begins to be submerged into the water. With continued filling of the plurality of displacement tanks, and the starboard-side wing tank 28 and the port-side wing tank 30, the vessel 10 continues to pivot or rotate approximately 90 degrees to a substantially vertical position (as shown in **FIG. 4**). The two wing tanks 28, 30 provide additional stability and control as the vessel 10 transitions from the horizontal position to the substantially vertical position.

In the substantially vertical position, the vessel 10 and the floatable wind turbine 24 will both float in the water, with a waterline WL at approximately the location shown in **FIG. 4**. Floating in this configuration, and with the described relative positions of the wind turbine 24 and the vessel 10, the ratio of displacement to water plane area for the wind turbine 24 and the vessel 10 are substantially similar. Said differently, when the wind turbine 24 and the vessel are floating in the vertical position, the displaced volume close to the surface of the water is relatively small. Close to the water surface, the velocity of the water particles is the largest. The velocity of the water particles decays exponentially with increasing water depth. The forces from the water particles on a body are greater where the velocity of the water particles is the highest. To minimize the forces on a body, it is therefore desirable to minimize the volume where the particle motion is the greatest. As such, a body with lesser volume near the surface of the water will be impacted less than a body with greater volume. Accordingly, it is desirable to reduce the volume of the vessel 10 body at the surface of the water when in the vertical position. As a result of the small displaced volume close to the surface, the wind turbine 24 and the vessel 10 each have very small heave, pitch, roll, yaw, surge, and sway motions. It is therefore possible to tune the motion characteristics of the vessel 10 so that the motion characteristics of the vessel 10 are coherent with the motion characteristics of the wind turbine 24. As a result, the relative motion between the two bodies is minimized. Providing a substantially similar ratio of displacement to water plane area for both the vessel 10 and the wind turbine 24 causes both bodies to react similarly to waves. With similar reactions, there is less need to accommodate for potential collisions between the two bodies when in the vertical position.

With regard to the plurality of displacement tanks 36, in accordance with one example embodiment of the present invention, the tanks are filled with water by opening valves located on the deck of the vessel 10. The operation of the valves can be done remotely, and the valves can be located wherever necessary to control the entry of water into the tanks. The plurality of displacement tanks 36 can later be emptied with the introduction of pressurized air from tanks or compressors. One reason for using pressurized air is to avoid the need for a pressure hull having capacity to absorb very large hydrostatic forces. With use of pressurized air it is possible to maintain substantially the same pressure in the tanks as the hydrostatic pressure outside of the tanks. As would be understood by those of ordinary skill in the art, some pressure difference between the inside and outside of the tank is needed to force the water out. However, this pressure difference is fairly small compared with the hydrostatic pressure. The weight and cost of the vessel 10 are substantially reduced without the need for a pressure hull.

Returning now to the process of delivering the floatable wind turbine 24, the wind turbine 24 floating in the vertical position can be removed from the vessel 10 and guided to a desired location to be moored in place. Once the wind turbine 24 and the vessel 10 are substantially separated, and a sufficient and safe distance is established between the wind turbine 24 and the vessel 10, the process can begin to pivot or rotate the vessel 10 from its vertical position back to a conventional horizontal position. To rotate the vessel 10, the water must be removed from the tanks. This can be accomplished a number of different ways, as those of ordinary skill in the art can appreciate. The preferred method for use with the present invention is the introduction of pressurized air into the tanks. As pressurized air enters the plurality of displacement tanks 36 and the wing tanks 28, 30, the water exits the tanks and the vessel 10 pivots or rotates about the lateral axis L back to its horizontal position.

An important aspect of the present invention is the existence of the starboard-side wing tank 28 and the port-side wing tank 30. The wing tanks on the vessel were designed to improve stability during the flipping process. These tanks are mounted on the deck as an extension of the ship's sides. The wing tanks give an increase of the vessel's waterline area. An increase of the total waterline area is equivalent with an increase in the vessel's stability. This can be demonstrated by the following equation governing initial stability:

$$GM = KB + BM - KG$$

$$GM = KB + \frac{(A_{WL})(r_{gyr})^2}{\tilde{N}} - KG$$

In the above equation, "GM" is the distance from the meta-center to a center of gravity. In general a greater quantity for GM indicates a greater stability for the vessel. However, a GM that is too great could result in a vessel that is too stable for the purposes described herein, particularly because it would lead to very choppy roll motions. For conventionally shaped vessels, GM should be between about 0.5 and 3.0 meters in operating conditions. "$\tilde{N}$" is the displacement of the vessel. "KB" is the distance from the keel of the vessel to the center of buoyancy. "KG" is the distance from the keel to the center of gravity. In horizontal position, the wing tanks 28, 30 are elevated above the waterline. As such, they do not increase the stability of the vessel 10 when the vessel 10 is in the horizontal position. The stability of the vessel 10, therefore, does not approach a condition of being too stable and causing choppy roll motions.

However, when the vessel 10 pivots or rotates toward the vertical position, the wing tanks 28, 30 increase the area in the waterline significantly. Without the wing tanks 28, 30, the stability of the hull 22 would be insufficient, and the hull 22 could topple or capsize. The wing tanks 28, 30 have the greatest effect on stability at about 20 degrees from horizontal.

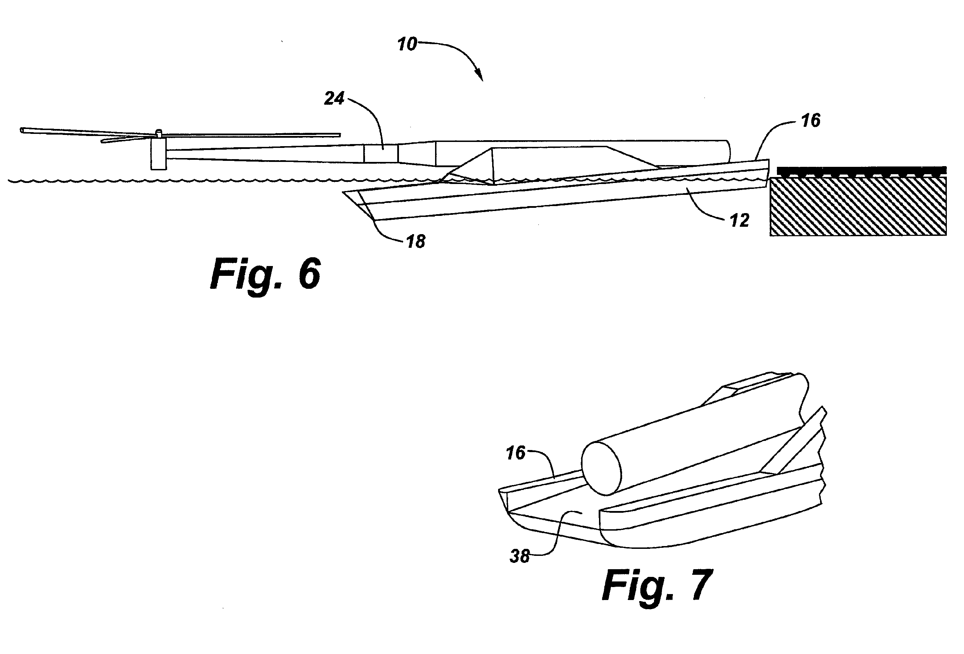

As shown in **FIG. 6**, the vessel 10 of the present invention can further include the ability to lower the bow about 5 degrees from horizontal during loading of a wind turbine onto the vessel. Other pivoting or rotating positions about the lateral axis L are possible and anticipated by the structure of the present invention. With the plurality of displacement tanks 36, a number of different hull positions may be achieved by adding and removing water in an organized, intentional, manner, to cause the hull to pivot or rotate as desired. In addition, in the event the wind turbine 24 is not well balanced in the center of the deck 34, it may be necessary to control the ballast in the plurality of displacement tanks 36 form a port to starboard perspective as well as to manage the rotation about the lateral axis L. All such functionality is anticipated by the vessel 10 of the present invention.

**FIG. 7** is a diagrammatic illustration of the stern 16 of the vessel. In accordance with one example embodiment of the present invention, the stern 16 can have an open stern configuration with an inclined plane deck 38. The inclined plane deck 38 is useful in lowering the center of gravity during operation, while also lifting the wind turbine blades and nacelle (collectively, the wind turbine 24) further away from the water surface.

The present invention has been described using a configuration of the stern of the vessel submerging and the bow elevating to place the vessel into the vertical position. One of ordinary skill in the art will appreciate that a vessel operating in the opposite manner (the bow submerging and the stern elevating) is a configuration considered to be anticipated by the present invention.

Numerous modifications and alternative embodiments of the present invention will be apparent to those skilled in the art in view of the foregoing description. Accordingly, this description is to be construed as illustrative only and is for the purpose of teaching those skilled in the art the best mode for carrying out the present invention. Details of the structure may vary substantially without departing from the spirit of the present invention, and exclusive use of all modifications that come within the scope of the appended claims is reserved. It is intended that the present invention be limited only to the extent required by the appended claims and the applicable rules of law.

The following items represent preferred embodiments of the invention:

1. A partially submersible vessel, comprising:

a hull having a port side, a starboard side, a stern, and a bow, the hull having a taper leading to the bow; a port-side wing tank disposed on a port side of the hull above a hull waterline and a starboard-side wing tank disposed on a starboard side of the hull above the hull waterline when the hull is in a horizontal position; and a deck of the vessel configured to support a wind turbine positioned recumbently thereon; the vessel configured to rotate, while afloat, about a lateral axis of the hull altering a pitch of the vessel in such a way as to completely submerge the stern and elevate the bow to a substantially vertical hull position characterized by a longitudinal axis of the hull being substantially perpendicular to a top surface of the water; wherein a waterline of the hull when floating in the substantially vertical hull position is between the taper and the bow.

2. The vessel of item 1, wherein vessel has a draught of about 120 meters or less.

3. The vessel of item 1 or 2, wherein the vessel is further configured to rotate about the lateral axis of the hull to submerge and maintain the bow at about 5 degrees from horizontal.

4. The vessel of item 1, 2, or 3, wherein the vessel comprises a barge.

5. The vessel of item 1, 2, 3, or 4, further comprising an open stern configuration having an inclined plane deck.

6. A method of transporting and delivering a floatable cargo, comprising:

loading the floatable cargo recumbently onto a partially submersible vessel, the floatable cargo being elevated above a surface of water in which the vessel floats;
positioning the vessel at a desired delivery location;
introducing ballast into a plurality of displacement tanks to pivot the vessel about a lateral axis, submerging a stern portion of the vessel and elevating a bow portion of the vessel, until the vessel has rotated from a substantially horizontal position to a substantially vertical position; and
releasing the floatable cargo from the vessel for positioning and mooring.

7. The method of item 6, further comprising filling two or more wing tanks with ballast, the wing tanks being positioned on the vessel in such a way that they are above a waterline of the vessel when the vessel is in the horizontal position, and below a waterline of the vessel when the vessel is in the vertical position.

8. The method of item 6 or 7, wherein vessel has a draught of about 120 meters or less.

9. The method of item 6, 7, or 8, wherein the vessel is further configured to rotate about the lateral axis of the hull to submerge and maintain the bow at about 5 degrees from horizontal.

10. The method of item 6, 7, 8, or 9, wherein the vessel comprises a barge.

11. The method of item 6, 7, 8, 9, or 10, further comprising an open stern configuration having an inclined plane deck.

12. The method of item 6, 7, 8, 9, 19, or 11, wherein the floatable cargo comprises a floatable wind turbine.

**Claims**

1. A partially submersible vessel, comprising:

a hull having a port side, a starboard side, a stern, and a bow, the hull having a taper leading to the bow; and
a deck of the vessel configured to support a wind turbine positioned recumbently thereon;
the vessel configured to rotate, while afloat, about a lateral axis of the hull altering a pitch of the vessel in such a way as to completely submerge the stern and elevate the bow to a substantially vertical hull position **characterized by** a longitudinal axis of the hull being substantially perpendicular to a top surface of the water;
wherein a waterline of the hull when floating in the substantially vertical hull position is between the taper and the bow.

2. The vessel of claim 1, wherein vessel has a draught of about 120 meters or less.

3. The vessel of claim 1, wherein the vessel is further configured to rotate about the lateral axis of the hull to submerge and maintain the bow at about 5 degrees from horizontal.

4. The vessel of claim 1, wherein the vessel comprises a barge.

5. The vessel of claim 1, further comprising an open stern configuration having an inclined plane deck.

6. The vessel of claim 1, further comprising a port-side wing tank disposed on a port side of the hull above a hull waterline and a starboard-side wing tank disposed on a starboard side of the hull above the hull waterline when the hull is in a horizontal position.

7. A method of transporting and delivering a floatable cargo, comprising:

loading the floatable cargo recumbently onto a partially submersible vessel, the floatable cargo being elevated above a surface of water in which the vessel floats;

positioning the vessel at a desired delivery location;

pivoting the vessel about a lateral axis, submerging a stern portion of the vessel and elevating a bow portion of the vessel, until the vessel has rotated from a substantially horizontal position to a substantially vertical position; and

releasing the floatable cargo from the vessel for positioning and mooring.

8. The method of claim 7, further comprising filling two or more wing tanks with ballast, the wing tanks being positioned on the vessel in such a way that they are above a waterline of the vessel when the vessel is in the horizontal position, and below a waterline of the vessel when the vessel is in the vertical position.

9. The method of claim 7, wherein vessel has a draught of about 120 meters or less.

10. The method of claim 7, wherein the vessel is further configured to rotate about the lateral axis of the hull to submerge and maintain the bow at about 5 degrees from horizontal.

11. The method of claim 7, wherein the vessel comprises a barge.

12. The method of claim 7, further comprising an open stern configuration having an inclined plane deck.

13. The method of claim 7, wherein the floatable cargo comprises a floatable wind turbine.

14. The method of claim 7, further comprising introducing ballast into a plurality of displacement tanks to cause the pivoting of the vessel about a lateral axis.

*Fig. 1*

EP 2 660 141 A1

EP 2 660 141 A1

**Fig. 2**

*Fig. 3*

**Fig. 4**

*Fig. 5*

**Fig. 6**

**Fig. 7**

EP 2 660 141 A1

Europäisches
Patentamt

European
Patent Office

Office européen
des brevets

## EUROPEAN SEARCH REPORT

**Application Number**

EP 13 00 3808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 451 191 A (CHAMBERS PETER RONALD [GB]) 21 January 2009 (2009-01-21) <br> * page 9, line 29 - page 10, line 1 * <br> * page 11, line 3 - line 7 * <br> * figures 3D,6 * | 1-5,7, 9-14 | INV. <br> B63B35/44 |
| A | WO 02/052150 A1 (BEHEERSMIJ P BUITENDIJK B V [NL]; BUITENDIJK ARIE [NL]) 4 July 2002 (2002-07-04) <br> * abstract * <br> * figures * | 1,7 | |
| A | US 7 112 010 B1 (GEIGER WILLIAM CLYDE [US]) 26 September 2006 (2006-09-26) <br> * abstract * <br> * figures * | 1,7 | |

TECHNICAL FIELDS
SEARCHED      (IPC)

B63B
F03D

The present search report has been drawn up for all claims

| Place of search | Date of completion of the search | Examiner |
|---|---|---|
| The Hague | 18 September 2013 | Gardel, Antony |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 13 00 3808

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2013

| Patent document cited in search report | | Publication date | Patent family member(s) | | Publication date |
|---|---|---|---|---|---|
| GB 2451191 | A | 21-01-2009 | EP | 2183480 A2 | 12-05-2010 |
| | | | GB | 2451191 A | 21-01-2009 |
| | | | WO | 2009010771 A2 | 22-01-2009 |
| WO 02052150 | A1 | 04-07-2002 | EP | 1346154 A1 | 24-09-2003 |
| | | | NL | 1016986 C2 | 01-07-2002 |
| | | | NO | 20032871 A | 22-08-2003 |
| | | | WO | 02052150 A1 | 04-07-2002 |
| US 7112010 | B1 | 26-09-2006 | NONE | | |

EPO FORM P0459

For more details about this annex : see Official Journal of the European Patent Office, No. 12/82

**EP 2 660 141 A1**

**Patent documents cited in the description**

- US 61255261 B